Europäisches Patentamt

European Patent Office

Office européen des brevets

(19)

(11) EP 0 586 996 B1

(12) EUROPÄISCHE PATENTSCHRIFT

(45) Veröffentlichungstag und Bekanntmachung des Hinweises auf die Patenterteilung:
20.10.1999 Patentblatt 1999/42

(51) Int Cl.⁶: **G10L 3/00**

(21) Anmeldenummer: 93113800.2

(22) Anmeldetag: 28.08.1993

(54) **Verfahren zur Spracherkennung mit dem eine Anpassung der Sprachcharakteristiken erreicht wird**

Speech recognition method with adaptation of the speech characteristics

Méthode de reconnaissance de parole avec adaptation des characteristiques de la parole

(84) Benannte Vertragsstaaten:
DE FR GB IT

(30) Priorität: 04.09.1992 DE 4229577

(43) Veröffentlichungstag der Anmeldung:
16.03.1994 Patentblatt 1994/11

(73) Patentinhaber: DaimlerChrysler AG
70567 Stuttgart (DE)

(72) Erfinder:
• Class, Fritz, Dr.
D-72587 Römerstein-3 (DE)
• Kaltenmeier, Alfred, Dr.
D-89075 Ulm (DE)
• Regel-Brietzmann, Peter, Dr.
D-89073 Ulm (DE)

(74) Vertreter: Fröhling, Werner Otto, Dr. et al
DaimlerChrysler AG,
Intellectual Property Management,
Sedanstr. 10/Gebäude 17
89077 Ulm (DE)

(56) Entgegenhaltungen:
EP-A- 0 459 384

• COMPUTER SPEECH AND LANGUAGE Bd. 5, Nr. 3, Juli 1991, LONDON, GB Seiten 275 - 294 JUANG 'Speech recognition in adverse environments'
• INTERNATIONAL CONFERENCE ON ACOUSTICS, SPEECH AND SIGNAL PROCESSING 91 Bd. 2, 14. Mai 1991, TORONTO, ONTARIO, CANADA Seiten 957 - 960 WU ET AL. 'Fast self-adapting broadband noise removal in the cepstral domain'
• INTERNATIONAL CONFERENCE ON ACOUSTICS, SPEECH AND SIGNAL PROCESSING 86 Bd. 4, 7. April 1986, TOKYO, JP Seiten 2639 - 2642 SUGIYAMA 'Unsupervised speaker adaptation methods for vowel templates'

**Beschreibung**

Die Erfindung betrifft ein Verfahren zur Spracherkennung nach dem Oberbegriff des Patentanspruchs 1.

Es ist das Grundproblem der Erkennung von Sprache überhaupt - sei es durch Mensch oder Maschine -, aufgrund der Variabilität der Sprachmuster verschiedene Bedeutung des Gesprochenen zu erkennen.

Der natürlichen und notwendigen Variabilität der Sprache zur Unterscheidung unterschiedlicher Wörter sind noch Effekte überlagert, die aus dem Sprecherumfeld stammen und für die Wortunterscheidung unnötig oder sogar störend sind. Diese störenden Varianten lassen sich in zwei grobe Kategorien unterteilen: in sprechspezifische Varianten und Varianten, die aus dem Umfeld stammen.

Der Hauptanteil dieser stationären Störeinflüsse stammt aus zwei Bereichen: den unterschiedlichen Sprechercharakteristiken (unterschiedliche Stimmlage von Männern und Frauen) und den Charakteristiken von Raum, Mikrofon, Leitung, Verstärkern und Filtern. Dadurch werden einzelne Frequenzanteile (Höhen und/oder Tiefen) besonders gewichtet. Ein typisches Beispiel dafür ist das Telefon. Hier treten starke Variationen auf durch unterschiedliche Mikrofone und Leitungen, aber auch durch sich laufend ändernde Position zwischen Mund und Mikrofon.

All diese Einflüsse färben die spektrale Charakteristik des Sprachsignals. Wollte man den Klassifikator auf all diese Möglichkeiten trainieren, wäre ein sehr großer Stichprobenumfang und ein aufwendiges Klassifikationskonzept erforderlich. Deshalb erscheint es effizienter, das Sprachsignal vorab zu filtern und dann erst mit den gefilterten Daten den Erkenner zu trainieren.

Der Erfindung liegt deshalb die Aufgabe zugrunde ein Verfahren anzugeben, bei dem die stationären, zeitinvarianten bzw. quasi-zeitinvarianten störenden Einflüsse im Sprachsignal möglichst schon im Vorfeld des Klassifikators erfaßt und entfernt werden, um dadurch die Sprache von Einflüssen zu befreien, die keine relevante Information enthalten. Dadurch soll der Klassifikator entlastet und eine höhere Erkennungsleistung erzielt werden.

Diese Aufgabe wird gelöst durch die im kennzeichnenden Teil des Patentanspruchs 1 angegebenen Merkmale. Vorteilhafte Ausgestaltungen und/oder Weiterbildungen sind den Unteransprüchen zu entnehmen.

Die Spracherkennungsverfahren werden beispielsweise zuerst aus dem abgetasteten und digitalisierten Signal im 10msec Raster Merkmalsvektoren berechnet, die das Signal im Spektralbereich repräsentieren. Diese Berechnung erfolgt über eine FFT (Fast Fourier Transformation) und anschließender Zusammenfassung der FFT-Koeffizienten zu 18 sog. Kanalwerten entsprechend einer 18-kanaligen Filterbank im Bereich von 200Hz bis 5.6KHz. Jeder der 18 Koeffizienten eines spektralen Merkmalsvektors repräsentiert die mittlere Leistung eines bestimmten Frequenzbereiches. Der Mittelwert der spektralen Vektorkomponenten wird als Langzeitspektrum bezeichnet.

Bei Erkennungssystemen, die spektrale Merkmale verwenden, können mit einer Normierung auf das Langzeitspektrum, d.h. Multiplikation mit dem Kehrwert des Langzeitspektrums, diese stationären Störeinflüsse beseitigt werden.

In den Spracherkennungssystemen werden jedoch sehr häufig cepstrale Merkmale eingesetzt, die zwar aus den spektralen Merkmalen abgeleitet werden, jedoch keine Energieinformation mehr enthalten. Dadurch ist auch keine Normierung auf das Langzeitspektrum direkt an den Cepstralwerten mehr möglich.

Mit der vorliegenden Erfindung wird deshalb ein Verfahren zur Normierung cepstraler Merkmale angegeben. Darüber hinaus wird die Möglichkeit einer adaptiven Normierung gezeigt, die unbemerkt vom Benutzer ständig mitläuft und eine Anpassung bei Sprecherwechsel oder Änderungen der Umgebungsbedingungen ermöglicht.

Bei Erkennungssystemen, die mit cepstralen Merkmalen arbeiten, kann durch Abzug des Mittelwertes jeder Vektorkomponente von den Komponenten des Cepstralvektors eine Normierung erreicht werden, die der Normierung auf das Langzeitspektrum ähnlich ist. Die Zusammenhänge zwischen Normierung im Spektralbereich (Bewertung mit Langzeitspektrum) und Mittelwertabzug im Cepstralbereich wird dadurch hergestellt, daß man die auf das Langzeitspektrum normierten Spektralwerte in den Cepstralbereich transformiert und mit der Rücktransformation der mittelwertigen Cepstralwerte in den Spektralbereich vergleicht. Der bei der Rücktransformation ermittelte Normierungsfaktor entspricht nicht der Normierung auf das Langzeitspektrum, sondern mit dem bei der Rücktransformation gewonnenen Normierungsfaktor würde man Cepstralwerte aus den auf das Langzeitspektrum normierte Spektralwerte erhalten, die nicht mittelwertfrei sind. Es läßt sich aber zeigen, daß die Normierung auf das Langzeitspektrum in den Cepstral-Mittelwerten enthalten ist. Insbesondere ergibt sich, daß eine multiplikative Bewertung im Spektralbereich einer additiven Bewertung im Cepstralbereich entspricht.

Die der Normierung auf das Langzeitspektrum äquivalente Normierung im Cepstralbereich wird durch die Substraktion des Mittelwertes der Cepstralvektorkomponenten $\bar{c}_k$ von den Cepstralvektorkomponenten $c_k$

$$\tilde{c}_k'(i) = c_k(i) - \bar{c}_k \qquad\qquad (1)$$

erreicht.

Sowohl bei übertragungscharakteristiken des Systems (Mikrofon- und Verstärkerfrequenzgang) als auch bei den Sprechercharakteristiken (Formantage..) handelt es sich um multiplikative Beeinflussungen der Frequenzcharakteristik eines Musters. Durch den Abzug der Mittelwerte der Cepstralkoeffizienten(filtern) werden solche Einflüsse wieder eliminiert.

Bisher wurde der einfache Fall vorausgesetzt, daß einmal vorhandene Bedingungen (Sprecher und Umgebung) konstant sind. Dann sind auch die cepstralen Mittelwerte konstant.

In der Praxis wird es jedoch der Normalfall sein, daß sich die Bedingungen laufend ändern (neuer Sprecher, der Sprecher dreht den Kopf, neue Telefonleitung wird aufgebaut...) und dadurch auch die Mittelwerte variieren. Es muß deshalb eine Anpassung an die Bedingungen stattfinden. Bei dem vorgeschlagenen Verfahren der Mittelwertnormierung ist dies möglich durch ständig mitlaufende Schätzung der Mittelwerte über ein Schleppfenster und Substraktion der aktualisierten Mittelwerte.

Beispielsweise wird ein vorab berechneter Mittelwertvektor $\bar{c}(0)$ (z.B. aus Stichproben mehrerer Sprecher) als Startvektor verwendet. Die Adaption der Komponenten des Mittelwertvektors erfolgt dann nach der Beziehung

$$\bar{c}_k(t) = [1 - \alpha(t)] \cdot \bar{c}_k(t-1) + \alpha(t) \cdot c_k(t). \tag{2}$$

Wie aus Gl. 2 zu sehen ist, wird der Adaptionsfaktor $\alpha$ ebenfalls adaptiv über der Zeit gestaltet. Dieser Adaptionsfaktor stellt eine Art Zeitkonstante dar, die das Einschwingverhalten der Mittelwerte bestimmt. Bei abrupten Änderungen der Verhältnisse wie sie z.B. bei Sprecherwechsel, Aufbau einer neuen Telefonverbindung o. ä. eintreten werden die Mittelwerte möglichst rasch nachgeführt und an die neuen Bedingungen angepaßt. Andererseits sollen die Mittelwerte bei relativ stabilen Verhältnissen nur langsam nachgeführt werden, um nur wirklich relevante Langzeitänderungen zu erfassen. Der Adaptionsfaktor $\alpha$ wird also folgendermaßen gestaltet:

$$\alpha(t) = \frac{1}{i}, \, t_{min} \leq i \leq t_{max} \tag{3}$$

wobei i die Nummer eines Merkmalsvektors über der Zeit bedeutet. i wird nur am Sprachsignal aktualisiert:

    $i = i + 1$ für $e(t) \geq$ Schwelle

    $i = i$      für $e(t) <$ Schwelle

e(t) ist ein kompandierter Energiewert, der parallel zu den Cepstralwerten im 10msec Abstand am Signal berechnet wird.

Gl. 3 stellt im Bereich zwischen $t_{min}$ und $t_{max}$ die Änderung von $\alpha(t)$ dar. Außerhalb dieses Bereiches ist $\alpha$ konstant.

Bei Erkennungssystemen, die mit spektralen Merkmalen arbeiten, hat sich gezeigt, daß durch eine Normierung auf das Langzeitspektrum ("Filterung") störende Einflüsse wie unterschiedliche Mikrofon-, Raum- und Sprechercharakteristiken vorab eliminiert werden können.

Die Erfindung hat den Vorteil, daß eine entsprechende Normierung der cepstralen Merkmale für beliebige Spracherkennungssysteme durchgeführt werden kann. Die Normierung erfolgt durch Substraktion des Mittelwertes der Cepstralvektorkomponenten von den jeweiligen Cepstralvektorkomponenten. Eine vorteilhafte Erweiterung für den praktischen Anwendungsfall wird durch eine adaptive Normierung durch gleitende Mittelwertschätzung mit einem Schleppfenster über der Zeit und adaptiver Zeitkonstante eingeführt.

Es läßt sich damit der Idealfall des sprecherspezifischen Mittelwertabzugs erreichen. Verglichen mit dem Fall ohne Normierung, d.h. ohne Mittelwertsubstraktion, ergibt sich bei Experimenten mit Isoliertwortstichproben eine bedeutende Steigerung der Erkennungsrate bei schwierigen Bedingungen. Auch bei Experimenten mit kontinuierlicher Sprache erhält man signifikante Verbesserungen durch gleitenden Mittelwertabzug.

Mit dem erfindungsgemäßen Verfahren erreicht man dadurch

    a) eine adaptive Anpassung an unterschiedliche Telefonkanäle bei Telefonanwendungen.

    b) eine Anpassung von Sprachstichproben, die unter verschiedenen Bedingungen aufgezeichnet wurden.

Je nach Anwendungsfall muß für die Zeitkonstante, d.h. für die Adaptionsgeschwindigkeit ein unterschiedlicher Wert gewählt werden. Die optimalen Parameter hierzu sind oft nur in praktischen Erprobungen zu ermitteln.

# EP 0 586 996 B1

**Patentansprüche**

1. Verfahren zur Normierung eines sprecheradaptiven Spracherkennungssystems auf ein Langzeitspektrum, dadurch gekennzeichnet,

   - daß die ceptstralen Merkmale eines Spracherkennungssystems verwendet werden

   - daß die Mittelwerte der Cepstralvektorkomponenten von den Cepstralvektorkomponnenten substrahiert werden und dadurch die cepstralen Merkmale für beliebige Spracherkennungssysteme normiert werden und

   - daß die Mittelwerte der Cepstralvektorkomponenten gleitend über ein Schleppfenster den sich ändernden Bedingungen von Sprecher und Umgebung angepaßt werden.

2. Verfahren nach Anspruch 1, dadurch gekennzeichnet, daß unterschiedliche Sprechercharakteristiken an ein vorgegebenes und an einen bestimmten Sprecher adaptiertes Spracherkennungssystem angepaßt werden.

3. Verfahren nach Anspruch 1, dadurch gekennzeichnet, daß bei Verwendung unterschiedlicher Mikrofone Mikrofoncharakteristiken ausgeglichen werden.

4. Verfahren nach Anspruch 1, dadurch gekennzeichnet, daß bei Spracherkennung über ein Telefon der Einfluß unterschiedlicher Telefonleitungen ausgeglichen wird.

5. Verfahren nach Anspruch 1, dadurch gekennzeichnet, daß in dem Spracherkennungssystem die Raumcharakteristik ausgeglichen wird.

6. Verfahren nach einem der vorhergehenden Ansprüche, dadurch gekennzeichnet, daß ein Ausgleich von verschiedenartigen'störeinflüssen durchgeführt wird.

7. Verfahren nach Anspruch 1, dadurch gekennzeichnet, daß die unter verschiedenen Bedingungen aufgenommenen Sprachstichproben eines Spracherkennungssystem angepaßt werden.

8. Verfahren nach Anspruch 1, dadurch gekennzeichnet, daß die Anpassung der Mittelwerte der Cepstralvektorkomponenten mittels eines Adaptionsfaktors über die Zeit erfolgt, derart, daß sowohl abrupte Änderungen der Bedingungen erfaßt werden als auch eine langsame Nachführung der Mittelwerte bei relativ stabilen Bedingungen erreicht wird.

9. Verfahren nach Anspruch 8, dadurch gekennzeichnet, daß sich der Adaptionsfaktor $\alpha$ (t) zwischen zwei Zeitbereichen $t_{min} \leq i \leq t_{max}$ mit $\alpha$ (t) = 1/i ändert.

**Claims**

1. Method for standardising a speech-adaptive speech recognition system to a long-term spectrum, characterised in that

   - the cepstral features of a speech-recognition system are used,

   - the mean values of the cepstral vector components are subtracted from the cepstral vector components and the cepstral features are thereby standardised for any speech-recognition system, and

   - the mean values of the cepstral vector components are smoothly adapted by way of a drag window to changing conditions of speech and environment.

2. Method according to claim 1, characterised in that different speech characteristics are matched to a predetermined speech-recognition system adapted to a specific speaker.

3. Method according to claim 1, characterised in that, in the case of use of different microphones, microphone characteristics are balanced out.

4. Method according to claim 1, characterised in that, in the case of speech recognition by way of a telephone, the influence of different telephone lines is balanced out.

5. Method according to claim 1, characterised in that in the speech recognition system the spatial characteristic is balanced out.

6. Method according to one of the preceding claims, characterised in that a balancing out of different disturbing influences is undertaken.

7. Method according to claim 1, characterised in that the random speech samples, which are obtained under different conditions, of a speech recognition system are adapted.

8. Method according to claim 1, characterised in that the adaptation of the mean values of the cepstral vector components is carried out by means of an adaptation factor over time in such a manner that not only abrupt changes in the conditions are detected, but a slow tracking of the mean values with relatively stable conditions is achieved.

9. Method according to claim 8, characterised in that the adaptation factor a (t) changes between two time ranges $t_{min} \leq i \leq t_{max}$ by $\alpha$ (t) = 1/i.

## Revendications

1. Méthode pour le cadrage d'un système de reconnaissance de la parole adaptatif vis-à-vis de l'individu sur un spectre à long terme, caractérisée en ce que :

   - on utilise les caractéristiques cepstrales d'un système de reconnaissance de parole,

   - on soustrait les valeurs moyennes des composantes de vecteur cepstral depuis les composantes de vecteur cepstral, et grâce à ceci on cadre les caractéristiques cepstrales pour toute sorte de systèmes de reconnaissance de parole, et

   - on adapte les valeurs moyennes des composantes de vecteur cepstral en glissement via une fenêtre glissante aux conditions qui se modifient de l'individu et de l'environnement.

2. Méthode selon la revendication 1, caractérisée en ce que l'on adapte différentes caractéristiques de l'individu à un système de reconnaissance de parole donné et adapté à un certain individu.

3. Méthode selon la revendication 1, caractérisée en ce que lors de l'utilisation de différents microphones, les caractéristiques des microphones sont compensées.

4. Méthode selon la revendication 1, caractérisée en ce que lors de la reconnaissance de parole via un téléphone, l'influence de différentes lignes téléphoniques est compensée.

5. Méthode selon la revendication 1, caractérisée en ce que dans le système de reconnaissance de parole, la caractéristique du local est compensée.

6. Méthode selon l'une quelconque des revendications précédentes, caractérisée en ce que l'on effectue une compensation des influences parasites de différentes natures.

7. Méthode selon la revendication 1, caractérisée en ce que l'on adapte les échantillons de parole enregistrés dans différentes conditions d'un système de reconnaissance de parole.

8. Méthode selon la revendication 1, caractérisée en ce que l'adaptation des valeurs moyennes des composantes de vecteur cepstral s'effectue en fonction du temps au moyen d'un facteur d'adaptation, de telle sorte que l'on détecte aussi bien des modifications brusques des conditions qu'une adaptation lente des valeurs moyennes lorsque les conditions sont relativement stables.

9. Méthode selon la revendication 8, caractérisée en ce que le facteur d'adaptation $\alpha$ (t) se modifie entre les plages

temporelles $t_{min} \leq i \leq t_{max}$ avec $\alpha$ (t) = 1/i.